Europäisches Patentamt

European Patent Office

Office européen des brevets

(11) Veröffentlichungsnummer: **0 492 488 A1**

## (12) EUROPÄISCHE PATENTANMELDUNG

(21) Anmeldenummer: **91121904.6**

(22) Anmeldetag: **20.12.91**

(51) Int. Cl.⁵: **F16K 17/38**

(30) Priorität: **28.12.90 DE 9017534 U**

(43) Veröffentlichungstag der Anmeldung:
**01.07.92 Patentblatt 92/27**

(84) Benannte Vertragsstaaten:
**AT BE CH DE ES FR GB IT LI NL**

(71) Anmelder: **Streif, Hans**
**Via Pastura Castelletto del Lago**
**CH-6983 Magliaso/Lugano(CH)**

(72) Erfinder: **Streif, Hans**
**Via Pastura Castelletto del Lago**
**CH-6983 Magliaso/Lugano(CH)**

(74) Vertreter: **Patentanwälte Dipl.-Ing. Alex**
**Stenger Dipl.-Ing. Wolfram Watzke Dipl.-Ing.**
**Heinz J. Ring**
**Kaiser-Friedrich-Ring 70**
**W-4000 Düsseldorf 11(DE)**

(54) **Thermische Armaturensicherung.**

㉗ Dir Erfindung betrifft eine thermische Armaturensicherung für eine Gasleitung mit einem Gehäuse (1), in dem ein mit einem Haltebolzen (18) gegen eine Druckfeder (9) vorgespannter Schließkegel (7) angeordnet ist, wobei der Haltebolzen mit seinem ersten Ende am Schließkegel befestigt ist und sich mit seinem zweiten Ende gegen einen Schmelzkörper (15) abstützt, so daß der Schließkegel im Brandfall nach dem Aufweichen des Schmelzkörpers automatisch in seine Schließstellung bewegt wird. Um eine einfach konstruierte Armaturensicherung für die Gasleitung zu schaffen, wird das Gehäuse als Rohrabschnitt mit einem Stutzen (4) und einem Ventilsitz (5) ausgebildet und die Druckfeder mit einem Ende auf einem in dem Stutzen des Gehäuses versenkt angeordneten Haltering (11) abgestützt.

Fig.4

EP 0 492 488 A1

Die Erfindung betrifft eine thermische Armaturensicherung für eine Gasleitung mit einem Gehäuse, in dem ein mit einem Haltebolzen gegen eine Druckfeder vorgespannter Schließkegel angeordnet ist, wobei der Haltebolzen mit seinem ersten Ende am Schließkegel befestigt ist und sich mit seinem zweiten Ende gegen einen Schmelzkörper abstützt, so daß der Schließkegel im Brandfall nach dem Aufwelchen des Schmelzkörpers automatisch in seine Schließstellung bewegt wird.

Aus der DE-OS 38 17 971 ist bereits eins gattungsgemäße Armaturensicherung bekannt, bei der ein gegen eine Feder vorgespannter Schließkegel in einem Gehäuse angeordnet ist. Der Schließkegel ist als Konus mit einer zylindrischen Ausnehmung ausgebildet. Die Feder stützt sich mit ihrem einen Ende in der Ausnehmung und mit ihrem anderen Ende an einem an das Gehäuse angeschraubten Gehäusedeckel ab. Der Gehäusedeckel weist eine zentrale Öffnung auf, durch die ein Bolzen greift, welcher in die Ausnehmung des Schließkegels geschraubt ist. Der Bolzen stützt sich mit seinem gegenüberliegenden Ende an einem Schmelzlot ab, welches über ein Stützrohr auf dem Deckel abgestützt ist. Schließlich sind Schmelzlot, Bolzen und Stützrohr in einer Schutzhülse angeordnet, die auf den Deckel aufgeschraubt ist und das Gehäuse der Armaturensicherung abdichtet.

Diese vorbekannte Armaturensicherung ist für sogenannte Gassteckdosen zur Verbindung mit einem Stecker am Ende eines Gasschlauches bestimmt und dafür auch bestens geeignet.

Ausgehend von diesem Stand der Technik liegt der Erfindung die **Aufgabe** zugrunde, eine einfach konstruierte Armaturensicherung für eine Gasleitung zu schaffen, die in Kombination mit Gas-Kontrollventilen in eine Gasleitung eingebaut werden kann.

Die **Lösung** dieser Aufgabe sieht vor, daß das Gehäuse als Rohrabschnitt mit einem Stutzen und einem Ventilsitz ausgebildet ist und daß sich die Druckfeder mit einem Ende auf einem in dem Stutzen des Gehäuses versenkt angeordneten Haltering abstützt.

Bei der erfindungsgemäßen Armaturensicherung besteht die vormontierbare Auslösevorrichtung aus einem Schließkegel welcher vorzugsweise zylindrisch ausgebildet ist und eine zylindrische Ausnehmung aufweist, in der eine Druckfeder angeordnet ist. Die Druckfeder stützt sich auf einem Haltering ab, welcher eine topfartige Ausnehmung aufweist, in die ein Schmelzkörper mit einer Öffnung eingelegt ist. Durch diese Öffnung ist ein Haltebolzen gesteckt, welcher an dem Schließkegel befestigt ist. Der Haltebolzen ist vorzugsweise in den Boden der Ausnehmung des Schließkegels eingeschraubt. In dieser Ausgangslage ist die Druckfeder gespannt. Die derart vormontierte Auslösevorrichtung ist in den Stutzen des als Rohrabschnitt ausgebildeten Gehäuses der Armaturensicherung eingesetzt. Der Stutzen ist schließlich mittels eines Deckels gasdicht verschlossen.

Diese Armaturensicherung hat den **Vorteil**, daß die Auslösevorrichtung einerseits als vormontiertes Bauteil in das Gehäuse eingefügt werden kann und andererseits ein leichtes Auswechseln der Auslösevorrichtung möglich ist. Hierzu ist lediglich der Deckel von dem Stutzen zu entfernen. Ferner hat die erfindungsgemäße Armaturensicherung den **Vorteil**, daß sie in Kombination mit Gas-Kontrollventilen in eine Gasleitung eingebaut werden kann. Dieser Einbau ist auch noch nachträglich in bestehende Gasleitungen und Gasgeräte möglich.

Bei einer bevorzugten Ausführungsform, der Erfindung ist vorgesehen, daß der Haltering zweiteilig ausgebildet ist, wobei die Teile des Halterings vorzugsweise als halbkreisförmige Ringsegmente ausgebildet sind und an ihren Enden jeweils zwei radial nach innen angeordnete Stege aufweisen. Die Stege greifen in entsprechende Ausnehmungen des Schmelzkörpers, so daß der Schmelzkörper relativ unverdrehbar zu den Halteringteilen angeordnet ist.

Die erfindungsgemäße Armaturensicherung wird vorzugsweise zur thermischen Absicherung von Armaturen in Gasgeräten und Brennern verwendet, wobei sie immer in Verbindung mit einem Gas-Kontrollventil geschaltet ist. Demzufolge dient die erfindungsgemäße Armaturensicherung als Vorschaltventil für Ventile zur Steuerung der Zünd- und Hauptflamme von Boilern, Kesseln und/oder Heizgeräten.

Bei einer zweiten Ausführungsform ist vorgesehen, daß der Haltering als Ringscheibe mit einer radialen Bohrung für den Einsatz eines patronenförmigen Schmelzkörpers ausgebildet ist. Bei dieser Ausführungsform ist es besonders vorteilhaft, daß ein nur sehr kleiner Schmelzkörper notwendig ist.

Der Haltebolzen weist bei einer Weiterentwicklung dieser Ausführungsform eine Einschnürung für den radialen Eingriff des Schmelzkörpers auf. Diese Ausbildung des Haltebolzens sorgt in Verbindung mit einem entsprechend konisch ausgebildeten Schmelzkörper für eine sichere Arretierung des Haltebolzens in der nicht ausgelösten Stellung der Armaturensicherung.

Es ist bei einer weiteren vorteilhaften Weiterentwicklung dieser zweiten Ausführungsform der Erfindung vorgesehen, daß vor dem Schmelzkörper ein in die Einschnürung eingreifender Arretierbolzen angeordnet ist. Bei dieser Weiterbildung ist nur ein sehr kleiner Schmelzkörper notwendig, um die Funktionssicherheit der Armaturensicherung zu gewährleisten.

Schließlich ist bei einer weiteren vorteilhaften Weiterentwicklung dieser zweiten Ausführungsform vorgesehen, daß der Arretierbolzen eine axial angeordnete Bohrung zur Aufnahme des geschmolzenen Schmelzkörpers aufweist. Bei dieser Ausführungsform ist in dem Arretierbolzen eine Bohrung vorgesehen, die ein Volumen aufweist, welches ungefähr dem Volumen des Schmelzkörpers entspricht, so daß dieser im geschmolzenen Zustand vollständig in der Bohrung aufgenommen werden kann.

Weitere Merkmale und Vorteile der erfindungsgemäßen Armaturensicherung ergeben sich aus der nachfolgenden Beschreibung der zugehörigen Zeichnungen, in der eine bevorzugte Ausführungsform der Armaturensicherung dargestellt ist. Es zeigt:

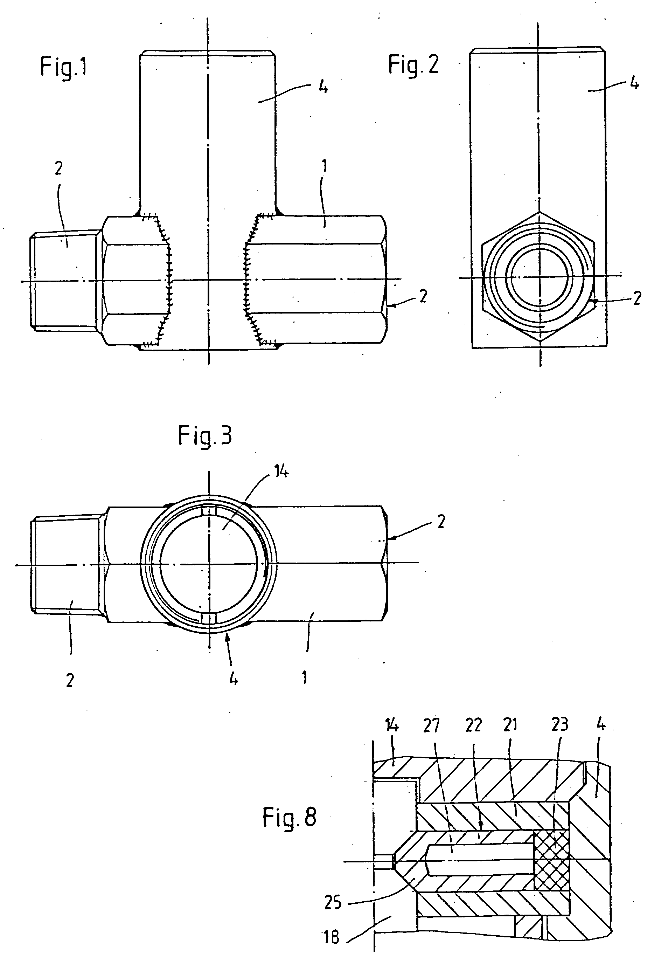

Fig. 1     eine Armaturensicherung in Ansicht;

Fig. 2     die Armaturensicherung gemäß Fig. 1 in einer Seitenansicht;

Fig. 3     die Armaturensicherung gemäß den Fig. 1 und 2 in einer Draufsicht;

Fig. 4     die Armaturensicherung gemäß einer der Fig. 1 bis 3 in einer geschnittenen Seitenansicht;

Fig. 5     die Armaturensicherung gemäß einer der Fig. 1 bis 4 in einer geschnittenen Draufsicht entlang der Linie V-V;

Fig. 6     eine zweite Ausführungsform einer Armaturensicherung in einer geschnittenen Seitenansicht;

Fig. 7     die Armaturensicherung gemäß Fig. 5 in einer geschnittenen Draufsicht entlang der Linie VI-VI und

Fig. 8     eine detaillierte Ansicht einer weiteren Ausfürungsform eines Arretierbolzens gemäß dem Ausschnitt VIII in der Fig. 6.

Ein Gehäuse ist als Rohrabschnitt 1 ausgebildet und weist zwei Anschlüsse 2 auf, die durch eine Öffnung 3 miteinander verbunden sind. Quer zu der Öffnung 3 ist ein Stutzen 4 angeordnet. Der Stutzen 4 weist einen Ventilsitz 5 für einen Schließkegel 7 Mit einer Auslösevorrichtung 6 auf.

Die Auslösevorrichtung 6 besteht aus einer in einer Ausnehmung 8 des Schließkegels 7 angeordneten Druckfeder 9, die sich mit ihrem einen Ende auf den Boden 10 der Ausnehmung 8 und mit ihrem anderen Ende auf einem den Boden 10 gegenüberliegend angeordneten Haltering 11 abstützt.

Der Haltering 11 liegt an einer in Stutzen 4 ausgebildeten ringförmigen Kante 12 an, und wird mittels einer auf den Stutzen 4 aufgeschraubten Verschlußschraube 14 gehalten.

In dem Haltering 11 ist eine topfförmige Ausnehmung angeordnet, in die ein Schmelzkörper 15 eingelegt ist.

Der Schmelzkörper 15 und der Haltering 11 weisen eine zentrale Öffnung 16 auf, durch die ein Haltebolzen 18 gesteckt ist. Dieser Haltebolzen 18 weist an seinem dem Schließkegel 7 zugewandten Ende ein Gewinde 19 auf, welches in den Boden 10 des Schließkegels 7 eingeschraubt ist. Das dem Gewinde 19 gegenüberliegende Ende des Haltebolzens 18 ist als Schraubenkopf 20 ausgebildet, dessen Durchmesser größer als die Öffnung 16 im Schmelzkörper 15 ist.

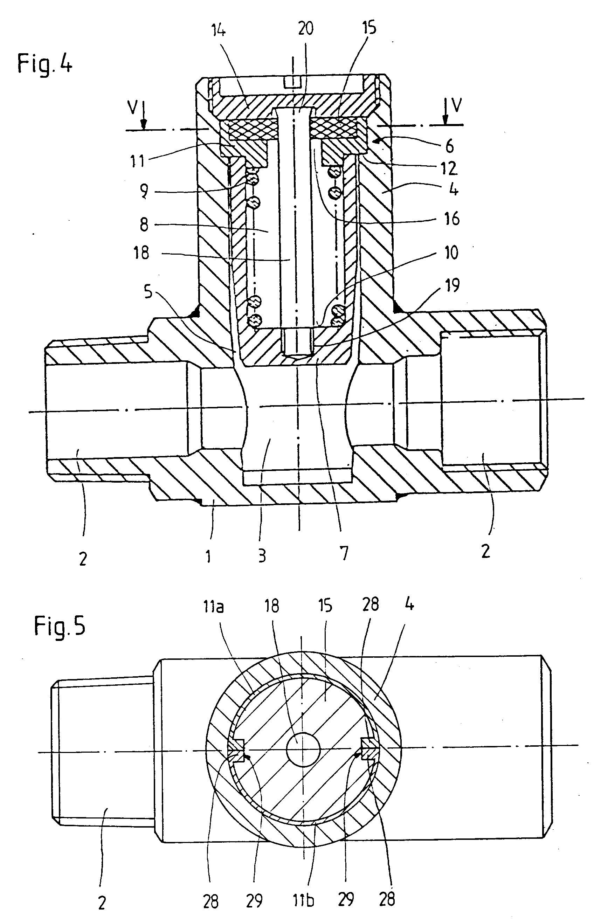

Die Druckfeder 9 ist in der in Fig. 4 dargestellten nicht ausgelösten Position der Auslösevorrichtung 6 vorgespannt.

Der Haltering 11 weist zwei Halteringteile auf, die jeweils als halbkreisförmige Ringsegmente 11a, 11b ausgebildet sind und an ihren Enden jeweils zwei radial nach innen angeordnete Stege 28 haben, welche in entsprechende Ausnehmungen 29 des Schmelzkörpers 15 greifen. Durch die Stege 28 wird eine Drehung des Schmelzkörpers 15 relativ zu dem Haltering 13 verhindert.

Bei der in den Figuren dargestellten Armaturensicherung ist es besonders vorteilhaft, daß die Auslösevorrichtung 6 als vormontiertes Bauteil in den Stutzen 4 des Rohrabschnittes 1 einsetzbar ist und durch den Haltering 11 und der Verschlußschraube 14 ortsfest im Stutzen 4 gehalten ist. Demzufolge kann die Auslösevorrichtung 6 auch bei eingebauter Armaturensicherung in einfacher Weise gewechselt werden. Hierzu ist es lediglich notwendig, die Verschlußschraube 14 zu demontieren und die Auslösevorrichtung 6 aus dem Stutzen 4 herauszuziehen.

Die Funktionsweise der Armaturensicherung ist wie folgt:

Die Armaturensicherung ist vor einer zu schützenden Armatur, beispielsweise einem Gas-Kontrollventil für die Zünd- und Hauptflamme eines Boilers oder eines Heizkörpers geschaltet. Der Schließkegel 7 ist bei der in Fig. 4 dargestellten nicht ausgelösten Stellung gegen die Kraft der Druckfeder 9 mittels des Haltebolzens 18 gehalten. Der Haltebolzen 18 stützt sich mit seinem Schraubenkopf 20 in der Öffnung 16 des Schmelzkörpers 15 ab. Der Schmelzkörper 15 ist in der im Haltering 11 ausgebildeten topfartigen Ausnehmung angeordnet. Die Druckfeder 9 ist zwischen dem Boden 10 und dem Haltering 11 vorgespannt.

Wird die Armaturensicherung über eine bestimmte Zeit einer vorgegebenen Temperatur ausgesetzt, beginnt der Schmelzkörper 15 zu schmilzen. Hierdurch wird die Öffnung 16 des Schmelzkörpers 15 größer, so daß der Schraubenkopf 20 des Haltebolzens 18 hindurchgleiten kann. Wird der Schraubenkopf 20 nicht mehr in dem Schmelzkörper 15 gehalten, drückt die Druckfeder 9 den Schließkegel 7 in den Ventilsitz 5 des Rohrabschnitts 1, so daß die Öffnung zwischen den Anschlüssen 2 gasdicht verschlossen wird.

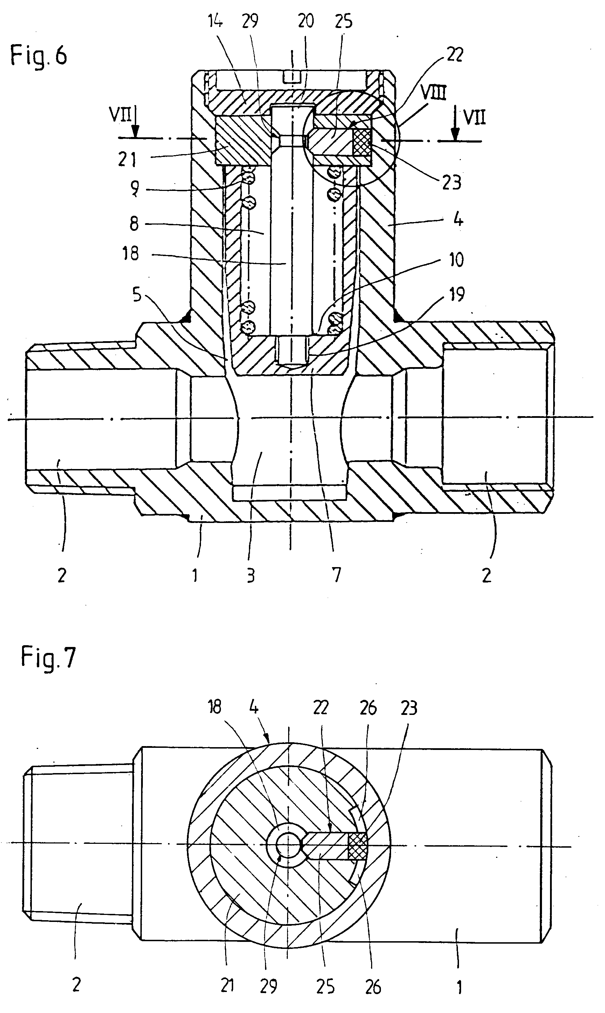

In den Figuren 6 und 7 ist eine zweite Aufführungsform einer erfindungsgemäßen Armaturensicherung dargestellt, bei der der Haltering 21 als Ringscheibe mit einer radialen Bohrung 22 für den Einsatz eines patronenförmigen Schmelzkörpers 23 ausgebildet ist. Vor dem Schmelzkörper 23 ist ein in eine Einschnürung 24 des Haltebolzens 18 eingreifender Arretierbolzen 25 angeordnet. Der Arretierbolzen 25 weist einen konisch geformten Kopf auf, der an entsprechend geformten Schrägflächen der Einschnürung 24 anliegt.

Beim Erweichen des Schmelzkörpers 23 wird der Arretierbolzen 25 durch die Schrägflächen der Einschnürung 24 und den konischen Kopf des Arretierbolzens 25 in axialer Richtung der Bohrung 22 verschoben, so daß der Arretierbolzen 25 nicht mehr in die Einschnürung 25 eingreift und der Schließkegel 7 von der Druckfeder 9 in den Ventilsitz 5 gedrückt wird. In dieser Stellung ist der Rohrabschnitt 1 zwischen den Anschlüssen gasdicht abgeschlossen.

In der Fig. 7 ist die Armaturensicherung in einer Draufsicht dargestellt. Es ist zu erkennen, daß die Bohrung 22 im Randbereich des Halterings 21 breiter ausgebildet ist als im Bereich des Arretierbolzens 25. Diese schlitzförmigen Verbreiterungen 26 dienen als Aufnahme für das geschmolzene Lot des Schmelzkörpers 23, so daß der Arretierbolzen 25 bei der Auslösung der Armaturensicherung axial verschiebbar ist.

Die Fig. 8 zeigt eine Ausschnittsvergrößerung eines weiteren Ausführungsbeispiels des Arretierbolzens 25. Der Arretierbolzen 25 weist eine axial angeordnete Bohrung 27 auf, in die der hinter dem Arretierbolzen 25 angeordnete Schmelzkörper 23 nach seinem Erweichen fließt. Das Volumen der Bohrung 27 entspricht ungefähr dem Volumen des Schmelzkörpers 23, so daß der Arretierbolzen 25 nach dem Erweichen des Schmelzkörpers 23 über die gesamte Länge der Bohrung 22 in dem Haltering 21 verschiebbar ist.

Der erfindungsgemäße Armaturensicherung ist nicht auf das dargestellte Ausführungsbeispiel beschränkt. Vielmehr sind Änderungen und Abwandlungen möglich ohne den Rahmen der Erfindung zu verlassen. Beispielsweise können die als Gewinde dargestellten Anschlüsse 2 auch als Flansch ausgebildet sein. Ferner kann der Stutzen 4 der zweiten Ausführungsform der Armaturensicherung eine ringförmige Nut aufweisen, die in der Höhe des Halteringes 21 angeordnet ist und in die das geschmolzene Lot des Schmelzkörpers 23 einfließen kann.

## Bezugzeichenliste

| | |
|---|---|
| 1 | Rohrabschnitt |
| 2 | Anschluß |
| 3 | Öffnung |
| 4 | Stutzen |
| 5 | Ventilsitz |
| 6 | Auslösevorrichtung |
| 7 | Schließkegel |
| 8 | Ausnehmung |
| 9 | Druckfeder |
| 10 | Boden |
| 11 | Haltering |
| 11a | Ringsegment |
| 11b | Ringsegment |
| 12 | Kante |
| 14 | Verschlußschraube |
| 15 | Schmelzkörper |
| 16 | Öffnung |
| 18 | Haltebolzen |
| 19 | Gewinde |
| 20 | Schraubenkopf |
| 21 | Haltering |
| 22 | Bohrung |
| 23 | Schmelzkörper |
| 24 | Einschnürung |
| 25 | Arretierbolzen |
| 26 | Verbreiterung |
| 27 | Bohrung |
| 28 | Steg |
| 29 | Ausnehmung |

## Patentansprüche

1. Thermische Armaturensicherung für eine Gasleitung mit einem Gehäuse, in dem ein mit einem Haltebolzen (18) gegen eine Druckfeder (9) vorgespannter Schließkegel (7) angeordnet ist, wobei der Haltebolzen (18) mit seinem ersten Ende am Schließkegel (7) befestigt ist und sich mit seinem zweiten Ende gegen einen Schmelzkörper (15) abstützt, so daß der Schließkegel (7) im Brandfall nach dem Aufweichen eines Schmelzkörpers (15) automatisch in seine Schließstellung bewegt wird, **dadurch gekennzeichnet,** daß das Gehäuse als Rohrabschnitt (1) mit einem Stutzen (4) und einem Ventilsitz (5) ausgebildet ist und daß sich die Druckfeder (9) mit einem Ende auf einem im Stutzen (4) des Gehäuses vesenkt angeordneten Haltering (11) abstützt.

2. Armaturensicherung nach Anspruch 1, dadurch gekennzeichnet, daß der Haltering (13) zweiteilig ausgebildet ist.

3. Armaturensicherung nach Anspruch 2, dadurch gekennzeichnet, daß die Teile des Halteringes (13) als halbkreisförmige Ringsegmente (11a,11b) ausgebildet sind und an ihren Enden jeweils zwei radial nach innen angeordnete Stege (28) aufweisen.

4. Armaturensicherung nach Anspruch 1, dadurch gekennzeichnet, daß der Haltering (21) als Ringscheibe mit einer radialen Bohrung (22) für den Einsatz eines patronenförmigen Schmelzkörpers (23) ausgebildet ist.

5. Armaturensicherung nach den Ansprüchen 1 und 4, dadurch gekennzeichnet, daß der Haltebolzen (18) mit einer Einschnürung (24) für den radialen Eingriff des Schmelzkörpers (23) versehen ist.

6. Armaturensicherung nach den Ansprüchen 1, 4 und 5, dadurch gekennzeichnet, daß vor dem Schmelzkörper (23) ein in die Einschnürung (24) eingreifender Arretierbolzen (25) angeordnet ist.

7. Armaturensicherung nach Anspruch 6, dadurch gekennzeichnet, daß der Arretierbolzen (25) eine axial angeordnete Bohrung (27) zur Aufnahme des geschmolzenen Schmelzkörpers (23) aufweist.

Fig.1

Fig.2

Fig.3

Fig.8

Fig. 4

Fig. 5

Fig. 6

Fig. 7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-C-30 800 (COSGROVE ET AL) <br> * Anspruch 1; Abbildung 2 * | 1 | F16K17/38 |
| A | * Abbildung 2 * <br> --- | 5 | |
| A | EP-A-0 247 275 (FMC CORPORATION) <br> * Anspruch 6; Abbildung 2 * <br> --- | 2,3,5,6 | |
| A | EP-A-0 365 106 (CAMERON IRON WORKS) <br> * Zusammenfassung; Abbildungen 3,4 * <br> --- | 4,6 | |
| A | FR-A-430 376 (WERNERT ET AL) <br> * Abbildung 1 * <br> --- | 5 | |
| A | WO-A-8 401 906 (HALTON OY) <br> * Zusammenfassung; Abbildung 6 * <br> --- | 7 | |
| D,A | DE-A-3 817 971 (STREIF) <br><br> ----- | | |

**RECHERCHIERTE SACHGEBIETE (Int. Cl.5)**

F16K

Der vorliegende Recherchenbericht wurde für alle Patentansprüche erstellt

| Recherchenort | Abschlußdatum der Recherche | Prüfer |
|---|---|---|
| BERLIN | 27 MAERZ 1992 | SCHLABBACH M. |